# FASCICULE DE BREVET EUROPEEN

(11) **EP 0 928 404 B1**
(45) Date de publication et mention de la délivrance du brevet: **23.06.2004**
(21) Numéro de dépôt: 98922888.7
(22) Date de dépôt: 28.04.1998
(51) Int. Cl.: F25B 41/06, B60H 1/32

(54) **UTILISATION D'UNE BOUCLE DE FLUIDE REFRIGERANT NOTAMMENT POUR UNE INSTALLATION DE CLIMATISATION DE VEHICULE**
VERWENDUNG EINES KÄLTEMITTELKREISLAUFES INSBESONDERE FÜR DIE KLIMAANLAGE EINES FAHRZEUGES
USE OF A REFRIGERATING FLUID CYCLE IN PARTICULAR FOR A MOTOR VEHICLE AIR CONDITIONING UNIT

(30) Priorité: 30.04.1997 FR 9705394
(43) Date de publication de la demande: 14.07.1999
(73) Titulaire: VALEO CLIMATISATION, 78321 La Verrière (FR)
(72) Inventeur: POMME, Vincent, F-78180 Montigny Le Bretonneux (FR)
(74) Mandataire: Gamonal, Didier
(86) Numéro de dépôt international: PCT/FR1998/000854
(87) Numéro de publication internationale: WO 1998/049502

(56) Documents cités:
- DE-A- 4 337 349
- FR-A- 2 707 739
- US-A- 4 324 112
- US-A- 4 742 694
- US-A- 4 910 972

## Description

L'invention concerne une boucle de fluide réfrigérant, notamment pour une installation de climatisation de l'habitacle d'un véhicule, comprenant un compresseur propre à élever la pression du fluide à l'état gazeux, un condenseur propre à condenser le fluide comprimé par le compresseur et à le sous-refroidir à l'état liquide, un réservoir séparateur propre à séparer le gaz résiduel du fluide à l'état liquide provenant du condenseur, un détendeur propre à abaisser la pression du fluide sortant du réservoir et un évaporateur propre à faire passer le fluide provenant du détendeur de l'état liquide à l'état gazeux avant son retour au compresseur.

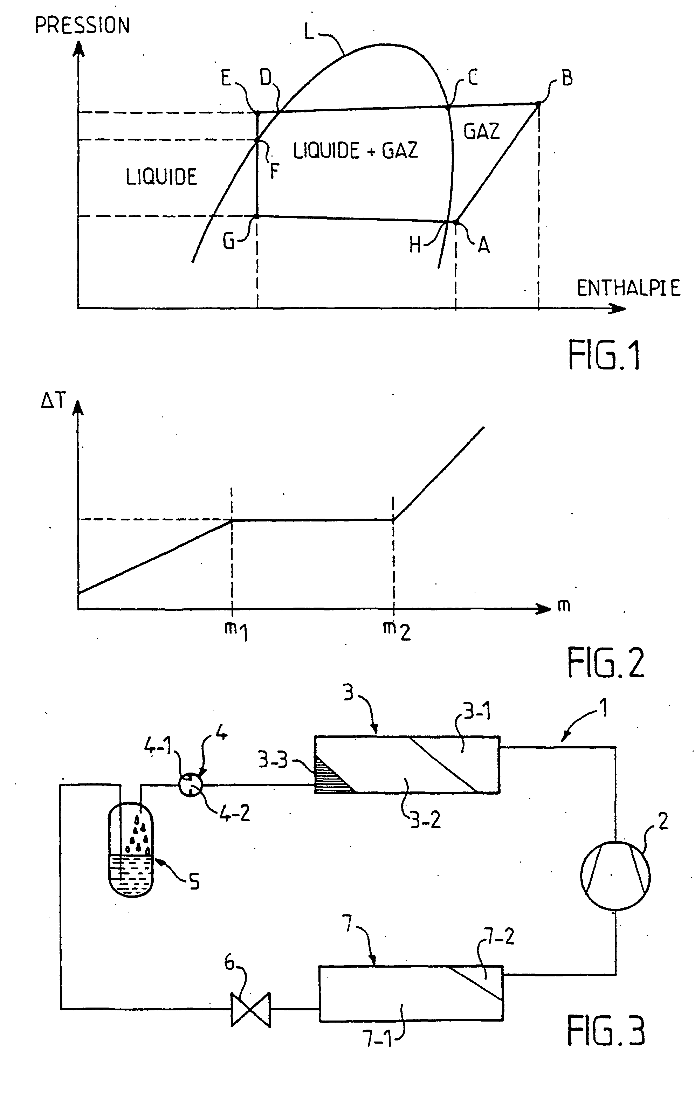

La figure 1 est un diagramme représentant un cycle thermodynamique décrit par le fluide réfrigérant dans une boucle de climatisation, tracé dans un système de coordonnées enthalpie/pression. Dans ce système, une courbe en forme de cloche L enveloppe une zone de coexistence entre liquide et gaz, tandis que le fluide est entièrement à l'état liquide à gauche du flanc gauche de la courbe (faible enthalpie) et entièrement à l'état gazeux à droite du flanc droit (enthalpie élevée).

Le cycle a sensiblement la forme d'un trapèze rectangle à bases horizontales. À partir d'un point A situé dans la zone gazeuse, le compresseur amène le fluide à l'état gazeux en un point B correspondant à une enthalpie et une pression plus élevées que celles du point A. Dans le condenseur, le fluide parcourt un segment horizontal du point B à un point E situé dans la zone liquide, lequel segment traverse les flancs droit et gauche de la courbe L en des points C et D respectivement. Les segments BC, CD et DE correspondent respectivement à une désurchauffe du fluide gazeux, à la condensation et à un sous-refroidissement du fluide à l'état liquide. A l'entrée de l'évaporateur, le fluide se trouve en un point G situé dans la zone liquide/gaz, correspondant à la même valeur d'enthalpie que le point E et à la même valeur de pression que le point A. Dans l'évaporateur, le fluide est ramené au point A en traversant en H le flanc droit de la courbe L.

Dans les boucles de fluide réfrigérant connues du type ci-dessus, le fluide passe par le réservoir séparateur au point E du cycle thermodynamique, et parcourt le segment EG dans le détendeur. Le point E étant situé dans la zone liquide, le réservoir est alors entièrement rempli de liquide et la quantité de fluide qu'il renferme ne peut varier. Lorsque la masse totale du fluide réfrigérant contenu dans la boucle diminue, notamment à cause des fuites du circuit, cette diminution s'effectue notamment aux dépens du condenseur, dont la capacité de sous-refroidissement est ainsi réduite, ce qui a pour effet de relever le niveau d'enthalpie du fluide à la sortie du condenseur et à l'entrée de l'évaporateur et par conséquent de réduire la puissance calorifique absorbée par le fluide dans l'évaporateur.

Une solution à ce problème consiste à s'écarter de l'architecture ci-dessus en interposant le réservoir séparateur entre une partie de condensation et une partie de sous-refroidissement du condenseur, de façon que l'état thermodynamique du fluide dans le réservoir corresponde au point D du cycle, situé sur la courbe de saturation, ce qui permet au réservoir de contenir une quantité de fluide variable en fonction de la masse totale de fluide dans le circuit.

Le but de l'invention est d'obtenir ce même résultat, dans une boucle telle que définie en introduction.

À cet effet, l'invention prévoit qu'une telle boucle de fluide réfrigérant comprend en outre un dispositif de prédétente interposé entre le condenseur et le réservoir, propre à abaisser la pression du fluide jusqu'à sa pression de vapeur saturante.

L'utilisation d'une boucle de fluide réfrigérant selon le préambule de la revendication 1 est connue du document US-A-4 742 694. Par rapport à ce document, l'invention est caractérisée par les caractéristiques de la partie caractérisante de la revendication 1.

Le dispositif de prédétente amène le fluide de l'état thermodynamique correspondant au point E à celui correspondant au point F, situé de nouveau sur la courbe de saturation, état dans lequel se trouve par conséquent le fluide contenu dans le réservoir séparateur. Le détendeur amène ensuite le fluide du point F au point G.

Il convient de noter que l'utilisation de la boucle selon l'invention empêche le point représentatif de l'état thermodynamique du fluide contenu dans le réservoir de pénétrer dans la zone liquide. En effet, s'il tend à le faire, il en résulte une augmentation de la quantité de liquide dans le réservoir et par conséquent une diminution de la quantité de fluide dans le condenseur et une limitation du sous-refroidissement, ce qui décale le segment EG vers la droite et par conséquent ramène le point représentatif de l'état du fluide dans le réservoir sur la courbe de saturation.

Des caractéristiques optionnelles de l'invention, complémentaires ou alternatives, sont énoncées ci-après:
- Le condenseur et le réservoir sont disposés à distance l'un de l'autre et le dispositif de prédétente est placé directement à la sortie du condenseur et est relié au réservoir par une conduite de liaison.
- Le condenseur, le dispositif de prédétente et le réservoir sont disposés à distance les uns des autres et reliés entre eux par des conduites de liaison.
- Le condenseur et le réservoir sont disposés à distance l'un de l'autre et le dispositif de prédétente est placé directement à l'entrée du réservoir et est relié au condenseur par une conduite de liaison.
- Le condenseur, le dispositif de prédétente et le réservoir forment un ensemble monobloc et le dispositif de prédétente est placé directement à la sortie du condenseur et à l'entrée du réservoir.
- Ledit détendeur est un détendeur thermostatique présentant une ouverture de passage réglable en fonction de l'état du fluide sortant de l'évaporateur et le dispositif de prédétente, le réservoir et le détendeur thermostatique forment un ensemble monobloc.
- Le dispositif de prédétente est constitué par un étranglement dans le trajet du fluide entre le condenseur et le réservoir.
- Le dispositif de prédétente est constitué par un clapet propre à produire un perte de charge sensiblement indépendante du débit du fluide.

Les caractéristiques et avantages de l'invention seront exposés plus en détail dans la description ci-après, en se référant aux dessins annexés, sur lesquels:
- la figure 1 est un diagramme thermodynamique qui a déjà été commenté ci-dessus;
- la figure 2 est un diagramme montrant la variation du degré de sous-refroidissement produit par le condenseur en fonction de la masse de fluide dans une boucle selon l'invention;
- la figure 3 est un schéma d'une boucle de fluide réfrigérant selon l'invention;
- les figures 4 à 8 sont des représentations schématiques montrant différentes possibilités pour l'implantation du dispositif de prédétente; et
- la figure 9 est une vue en coupe d'un dispositif de prédétente sous forme de clapet taré.

La boucle 1 représentée schématiquement sur la figure 3 comprend un compresseur 2, un condenseur 3, un dispositif de prédétente 4, un réservoir séparateur ou "bouteille" 5, un détendeur 6 et un évaporateur 7, parcourus dans cet ordre par le fluide réfrigérant. La partie inférieure du réservoir 5 est remplie de fluide à l'état liquide, le gaz résiduel pénétrant dans le réservoir reste au-dessus du niveau de liquide et seul du fluide à l'état liquide est prélevé au-dessous de ce niveau pour être envoyé vers le détendeur 6. Dans le condenseur 3 sont indiquées schématiquement une partie de désurchauffe 3-1 où le fluide à l'état gazeux provenant du compresseur est refroidi jusqu'à la température d'équilibre liquide-gaz, une partie de condensation 3-2 où le fluide est condensé à la température d'équilibre, et une partie de sous-refroidissement 3-3 où le fluide à l'état liquide est refroidi au-dessous de la température d'équilibre. De même, l'évaporateur 7 comprend une partie de vaporisation 7-1 et une partie de surchauffe 7-2.

La figure 2 fournit une courbe représentative de la variation de la différence ΔT entre la température d'équilibre liquide/gaz dans le condenseur (température de condensation) et la température du fluide à la sortie du condenseur, après sous-refroidissement, en fonction de la masse m de fluide contenue dans une boucle selon l'invention. Cette courbe est formée d'une première partie ascendante jusqu'à une valeur m₁, d'une seconde partie horizontale de m₁ à m₂ et d'une troisième partie ascendante au-delà de m₂. Le palier est obtenu grâce à la variation de la quantité de fluide contenue dans le réservoir 5, les valeurs m₁ et m₂ correspondant respectivement aux niveaux minimal et maximal de liquide dans celui-ci. Le degré de sous-refroidissement, et par conséquent les performances de la boucle, restent sensiblement constants jusqu'à ce que les fuites ramènent la masse de fluide à m₁. La masse initiale de fluide est choisie de préférence au voisinage de m₂ de manière que la durée de fonctionnement stable soit la plus longue possible. La longueur du palier est elle-même fonction de la capacité de séparation liquide/gaz et du volume du réservoir.

Pour la boucle connue décrite plus haut dans laquelle l'état thermodynamique du fluide dans le réservoir séparateur correspond au point E du cycle, le palier de la courbe de la figure 2 n'existe pas et le degré de sous-refroidissement varie de façon continue avec la quantité de fluide.

Le dispositif de prédétente est représenté à titre d'exemple sous la forme d'un diaphragme 4-1 disposé en travers du trajet du fluide et présentant un orifice 4-2. Ce diaphragme peut être remplacé par un tronçon de tubulure présentant un diamètre intérieur réduit par rapport à la tubulure reliant le réservoir 5 et le détendeur 6, par exemple un diamètre de 2 à 3 mm au lieu de 6 mm.

Comme le montre schématiquement la figure 3, le condenseur 3, le dispositif de prédétente 4 et le réservoir 5 peuvent être disposés à distance les uns des autres et reliés entre eux par des conduites de liaison.

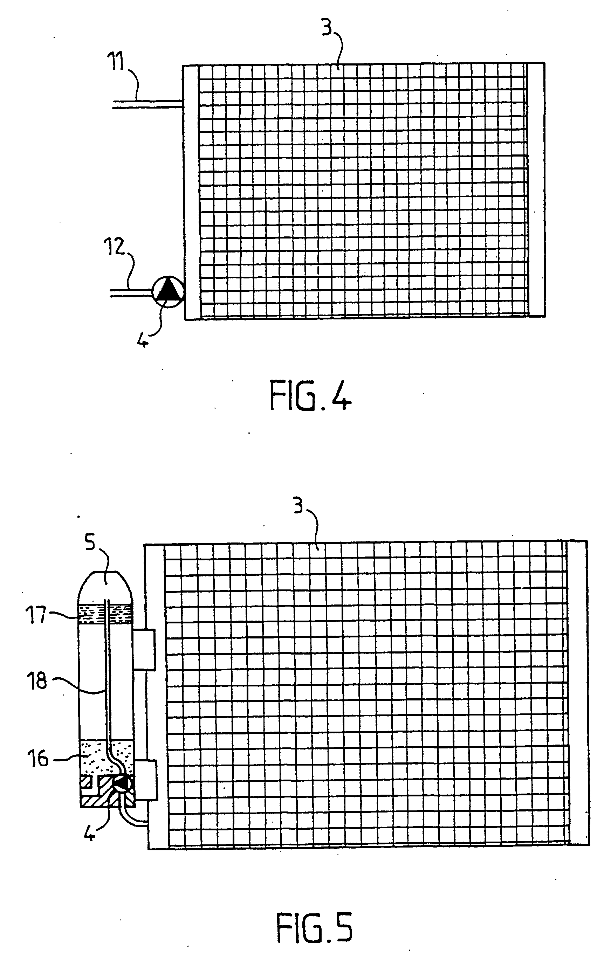

A titre de variante, la figure 4 montre un condenseur 3 à la sortie duquel est intégré le dispositif de prédétente 4, l'entrée du condenseur et la sortie du dispositif de prédétente 4 étant reliées au compresseur et au réservoir non représentés par dès conduites respectives 11 et 12.

La figure 5 représente un ensemble monobloc formé d'un condenseur 3, d'un réservoir séparateur 5 et d'un dispositif de prédétente 4 raccordé directement à la sortie du condenseur et à l'entrée du réservoir.

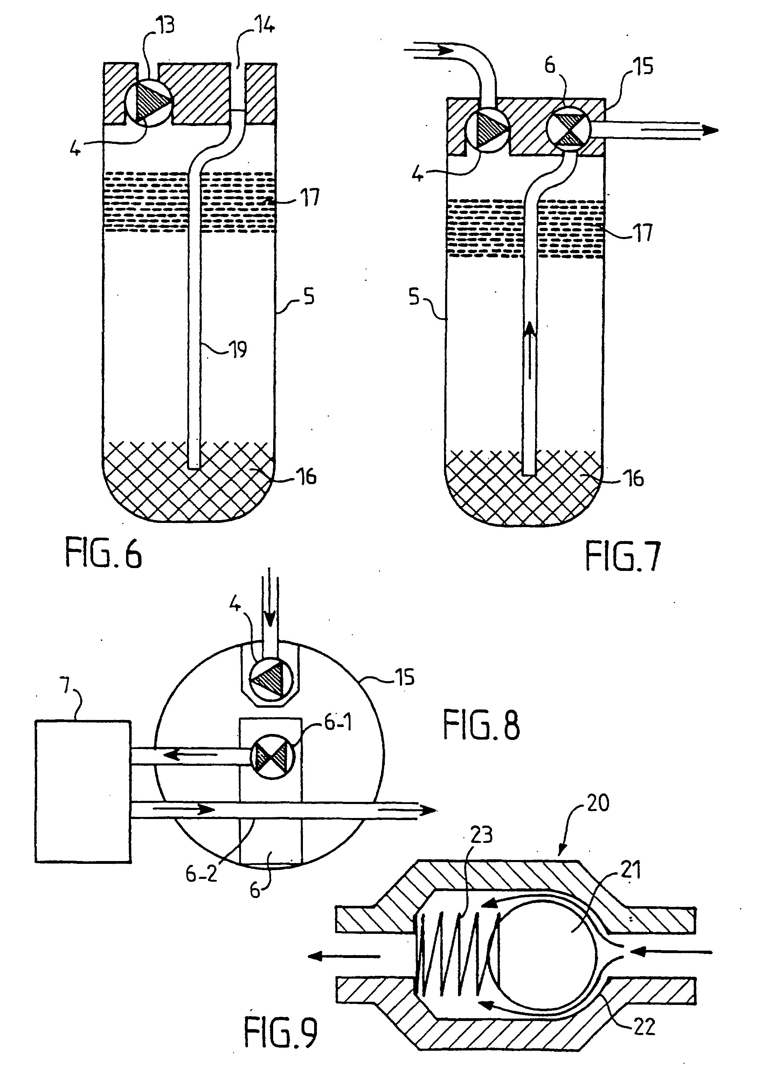

Dans l'exemple d'implantation selon la figure 6, le dispositif de prédétente 4 est intégré à l'entrée du réservoir séparateur 5. L'entrée 13 du dispositif de prédétente et la sortie 14 du réservoir peuvent être reliées au condenseur et au détendeur non représentés par des conduites respectives.

Les figure 7 et 8 montrent schématiquement, respectivement en coupe verticale et en vue de dessus, un ensemble monobloc comprenant un dispositif de prédétente 4, un réservoir séparateur 5 et un détendeur thermostatique 6. Le détendeur thermostatique 6 comprend de façon connue une chambre de détente 6-1 et une chambre de commande 6-2, traversées par le fluide respectivement sur son trajet du réservoir 5 à l'évaporateur 7 et sur son trajet de l'évaporateur au compresseur, l'action de détente exercée dans la chambre de détente 6-1 étant réglée en fonction de la température et/ou de la pression du fluide dans la chambre 6-2. Dans l'exemple représentée le dispositif de prédétente 4 et le détendeur 6 sont intégrés dans un bloc 15 limitant vers le haut le volume intérieur du réservoir 5. La sortie du dispositif de prédétente et l'entrée de la chambre de détente 6-1 se confondent respectivement avec l'entrée et la sortie du réservoir 5.

Sur chacune des figures 5 à 7, on voit un volume de fluide à l'état liquide 16 occupant la partie inférieure du réservoir 5, et un élément filtrant et desséchant 17 disposé au-dessus du niveau de liquide. Sur la figure 5, l'entrée et la sortie du réservoir sont à la partie inférieure. Le fluide entrant dans le réservoir est amené par un tube 18 jusqu'au-dessus du filtre 17, que le liquide doit traverser de haut en bas pour se rassembler au fond du réservoir, puis en sortir directement par la sortie inférieure. Sur les figures 6 et 7, l'entrée et la sortie sont disposées à la partie supérieure. Le fluide pénètre directement dans l'espace disposé au-dessus du filtre 17, et le liquide est amené par un tube 19 de la partie inférieure à la sortie supérieure. D'une façon générale, l'entrée et la sortie peuvent être disposées à des endroits quelconques du réservoir séparateur, pourvu que le fluide soit libéré au-dessus du filtre 17 et prélevé au-dessous du niveau du liquide 16.

La perte de charge produite par le dispositif de prédétente à diaphragme illustré schématiquement sur la figure 3 est fonction croissante du débit de fluide. Si on souhaite une perte de charge constante, on peut adopter un dispositif de prédétente présentant une ouverture de passage qui est fonction croissante du débit, tel que celui illustré sur la figure 9. Ce dispositif 20 comprend une bille 21 sollicitée vers un siège 22 par un ressort hélicoïdal 23 de manière à obturer le passage du fluide. La pression de fluide tend à écarter la bille de son siège en comprimant le ressort 23.

Bien entendu, le dispositif de la figure 9 n'a été décrit qu'à titre d'exemple et peut être remplacé par tout dispositif connu sensiblement équivalent.

La mise en place du dispositif.de prédétente immédiatement à la sortie du condenseur et/ou immédiatement à l'entrée du réservoir, et/ou la disposition du détendeur immédiatement à la sortie du réservoir, comme décrites en relation avec les figures 4 à 8, sont avantageuses en ce qu'elles simplifient le montage de la boucle et diminuent le nombre de raccordements étanches à prévoir.

## Revendications

1. Utilisation d'une boucle (1) de fluide réfrigérant, notamment pour une installation de climatisation de l'habitacle d'un véhicule; comprenant un compresseur (2) élevant la pression du fluide à l'état gazeux, un condenseur (3) condensant le fluide comprimé par le compresseur un réservoir séparateur (5) séparant le gaz résiduel du fluide à l'état liquide provenant du condenseur, un dispositif de prédétente (4) interposé entre le condenseur et le réservoir, à l'état liquide jusqu'à sa pression de vapeur saturante un détendeur (6) abaissant la pression du fluide sortant du réservoir et un évaporateur (7) faisant passer le fluide provenant du détendeur de l'état liquide à l'état gazeux avant son retour au compresseur (2), **caractérisée en ce que** le condensateur (3) sous-refroidit à l'état liquide le fluide comprimé par le compresseur, le sous refroidissement est sensiblement constant entre un niveau minimal et un niveau maximal de liquide dans le réservoir séparateur (5) et **en ce que** le dispositif de pré-détente (4) abaisse la pression du fluide.

2. Utilisation d'une boucle selon la revendication 1, **caractérisée en ce que** le condenseur (3) et le réservoir (5) sont disposés à distance l'un de l'autre et que le dispositif de prédétente (4) est placé directement à la sortie du condenseur et est relié au réservoir par une conduite de liaison (12).

3. Utilisation d'une boucle selon la revendication 1, **caractérisée en ce que** le condenseur (3), le dispositif de prédétente (4) et le réservoir (5) sont disposés à distance les uns des autres et reliés entre eux par des conduites de liaison.

4. Utilisation d'une boucle selon la revendication 1, **caractérisée en ce, que** le condenseur (3) et le réservoir (5) sont disposés à distance l'un de l'autre et que le dispositif de prédétente (4) est placé directement à l'entrée du réservoir et est relié au condenseur par une conduite de liaison.

5. Utilisation d'une boucle selon la revendication 1, **caractérisée en ce que** le condenseur (3), le dispositif de prédétente (4) et le réservoir (5) forment un ensemble monobloc et que le dispositif de prédétente (4) est placé directement à la sortie du condenseur (3) et à l'entrée du réservoir (5).

6. Utilisation d'une boucle selon l'une des revendications 4 et 5, **caractérisée en ce que** ledit détendeur est un détendeur thermostatique (6) présentant une ouverture de passage réglable en fonction de l'état du fluide sortant de l'évaporateur et que le dispositif de prédétente (4), le réservoir (5) et le détendeur thermostatique forment un ensemble monobloc.

7. Utilisation d'une boucle selon l'une des revendications précédentes, **caractérisée en ce que** le dispositif de prédétente est constitué par un étranglement (4-1) dans le trajet du fluide entre le condenseur et le réservoir.

8. Utilisation d'une boucle selon l'une des revendications précédentes, **caractérisée en ce que** le dispositif de prédétente est constitué par un clapet (20) produisant une perte de charge sensiblement indépendante du débit du fluide.

## Patentansprüche

1. Verwendung eines Kühlfluidkreislaufs (1) insbesondere für eine Klimaanlage des Fahrgastraums eines Fahrzeugs mit einem Kompressor (2), der den Druck des Fluids im gasförmigen Zustand erhöht, einem Kondensator (3) der das durch den Kompressor komprimierte Fluid kondensiert, einem Abscheidereservoir (5), das das Restgas des vom Kondensator kommenden Fluids im flüssigen Zustand abtrennt, einer vorgeschalteten Druckmindervorrichtung (4), die zwischen dem Kondensator und dem Reservoir eingesetzt ist, einem Druckminderer (6), der den Druck des aus dem Reservoir austretenden Fluids absenkt, und einen Verdampfer (7), der das von dem Druckminderer kommende Fluid vor seiner Rückkehr in den Kompressor (2) vom flüssigen Zustand in den gasförmigen Zustand übergehen lässt, wobei der Kondensator (3) das durch den Kompressor komprimierte Fluid im flüssigen Zustand unterkühlt,
**dadurch gekennzeichnet, dass** die Unterkühlung zwischen einem minimalen und einem maximalen Flüssigkeitspegel in dem Abscheidereservoir (5) im Wesentlichen konstant ist und dass die vorgeschaltete Druckmindervorrichtung (4) den Druck des Fluids bis auf seinen Sättigungsdampfdruck absenkt.

2. Verwendung eines Kreislaufs nach Anspruch 1, **dadurch gekennzeichnet, dass** der Kondensator (3) und das Reservoir (5) voneinander beabstandet sind und dass die vorgeschaltete Druckmindervorrichtung (4) direkt am Ausgang des Kondensators platziert und mit dem Reservoir durch eine Verbindungsleitung (12) verbunden ist.

3. Verwendung eines Kreislaufs nach Anspruch 1,
**dadurch gekennzeichnet, dass** der Kondensator (3), die vorgeschaltete Druckmindervorrichtung (4) und das Reservoir (5) voneinander beabstandet angeordnet und untereinander durch Verbindungsleitungen verbunden sind.

4. Verwendung eines Kreislaufs nach Anspruch 1,
**dadurch gekennzeichnet, dass** der Kondensator (3) und das Reservoir (5) voneinander beabstandet sind und dass die vorgeschaltete Druckmindervorrichtung (4) direkt am Eingang des Reservoirs platziert und mit dem Kondensator durch eine Verbindungsleitung verbunden ist.

5. Verwendung eines Kreislaufs nach Anspruch 1,
**dadurch gekennzeichnet, dass** der Kondensator (3), die vorgeschaltete Druckmindervorrichtung (4) und das Reservoir (5) eine einstückige Einheit bilden und dass die vorgeschaltete Druckmindervorrichtung (4) direkt am Ausgang des Kondensators (3) und am Eingang des Reservoirs (5) platziert sind.

6. Verwendung eines Kreislaufs nach einem der Ansprüche 4 und 5, **dadurch gekennzeichnet, dass** der Druckminderer ein thermostatischer Druckminderer (6) ist, der eine in Abhängigkeit von dem Zustand des aus dem Verdampfer austretenden Fluids einstellbare Durchtrittsöffnung aufweist, und dass die vorgeschaltete Druckmindervorrichtung (4), das Reservoir (5) und der thermostatische Druckminderer eine einstückige Einheit bilden.

7. Verwendung eines Kreislaufs nach einem der vorhergehenden Ansprüche, **dadurch gekennzeichnet, dass** die vorgeschaltete Druckmindervorrichtung aus einer Querschnittsverminderung (4-1) im Weg des Fluids zwischen dem Kondensator und dem Reservoir besteht.

8. Verwendung eines Kreislaufs nach einem der vorhergehenden Ansprüche, **dadurch gekennzeichnet, dass** die vorgeschaltete Druckmindervorrichtung aus einem Rückschlagventil (20) besteht, das einen von der Durchflussmenge des Fluids unabhängigen Druckabfall erzeugt.

## Claims

1. Use of a cooling fluid loop (1), in particular for an air-conditioning system of the passenger compartment of a vehicle, comprising a compressor (2) which raises the pressure of the fluid in the gas state, a condenser (3) which condenses the fluid compressed by the compressor, a separator tank (5) which separates the residual gas from the fluid in the liquid state coming from the condenser, a pre-expansion device (4) interposed between the condenser and the tank, an expander (6) which lowers the pressure of the fluid leaving the tank, an evaporator (7) which converts the fluid coming from the expander from the liquid state to the gas state before it returns to the compressor (2), the condenser (3) supercooling the fluid compressed by the compressor in the liquid state, **characterized in that** the supercooling is substantially constant between a minimum level and a maximum level of liquid in the separator tank (5), and **in that** the pre-expansion device (4) lowers the pressure of the fluid to its saturated vapour pressure.

2. Use of a loop according to Claim 1, **characterized in that** the condenser (3) and the tank (5) are arranged at a distance from each other, and the pre-expansion device (4) is placed directly at the outlet of the condenser and is connected to the tank by a connecting line (12).

3. Use of a loop according to Claim 1, **characterized in that** the condenser (3), the pre-expansion device (4) and the tank (5) are arranged at a distance from one another and are connected together by connecting lines.

4. Use of a loop according to Claim 1, **characterized in that** the condenser (3) and the tank (5) are arranged at a distance from each other, and **in that** the pre-expansion device (4) is placed directly at the inlet of the tank and is connected to the condenser by a connecting line.

5. Use of a loop according to Claim 1, **characterized in that** the condenser (3), the pre-expansion device (4) and the tank (5) form a monobloc assembly, and **in that** the pre-expansion device (4) is placed directly at the outlet of the condenser (3) and at the inlet of the tank (5).

6. Use of a loop according to one of Claims 4 and 5,
**characterized in that** the said expander is a thermostatic expander (6), having a passage opening which is adjustable as a function of the state of the fluid leaving the evaporator, and **in that** the pre-expansion device (4), the tank (5) and the thermostatic expander form a monobloc assembly.

7. Use of a loop according to one of the preceding claims, **characterized in that** the expansion device consists of a constriction (4-1) in the path of the fluid between the condenser and the tank.

8. Use of a loop according to one of the preceding claims, **characterized in that** the pre-expansion device consists of a valve (20) producing a head loss substantially independent of the flow rate of the fluid.
